# EUROPEAN PATENT SPECIFICATION

(11) **EP 2 083 375 B1**
(45) Date of publication and mention of the grant of the patent: **20.06.2012**
(21) Application number: 09000873.1
(22) Date of filing: 22.01.2009
(51) Int. Cl.: G06K 9/00, G06T 7/00, G01N 15/14

(54) **Cell image processing apparatus, cell image displaying system and cell image displaying method**
Zellenabbildungsverarbeitungsvorrichtung, Zellenabbildungsanzeigesystem und Zellenabbildungsanzeigeverfahren
Appareil de traitement d'image cellulaire, système d'affichage d'image cellulaire et procédé d'affichage d'image cellulaire

(30) Priority: 23.01.2008 JP 2008013122
(43) Date of publication of application: 29.07.2009
(73) Proprietor: Sysmex Corporation, Kobe-shi, Hyogo 651-0073 (JP)
(72) Inventor: Yamada, Kazuhiro, Kobe-shi Hyogo 651-0073 (JP); Tohma, Ryuichi, Kobe-shi Hyogo 651-0073 (JP); Yamakawa, Nobuyoshi, Kobe-shi Hyogo 651-0073 (JP)
(74) Representative: HOFFMANN EITLE

(56) References cited:
- WO-A-02/057997
- DE-A1- 3 503 475
- US-A1- 2006 109 343
- PIURI V ET AL: "Morphological classification of blood leucocytes by microscope images", COMPUTATIONAL INTELLIGENCE FOR MEASUREMENT SYSTEMS AND APPLICATIONS, 2 004. CIMSA. 2004 IEEE INTERNATIONAL CONFERENCE ON BOSTON, MA, USA JULY 14-16, 2004, PISCATAWAY, NJ, USA,IEEE, PISCATAWAY, NJ, USA, 14 July 2004 (2004-07-14), pages 103-108, XP010773385, DOI: DOI:10.1109/CIMSA.2004.1397242 ISBN: 978-0-7803-8341-8

## Description

### Field of the Invention

The present invention relates to a cell image processing apparatus, a cell image displaying system and a cell image displaying method for processing a cell image obtained by imaging a sample smeared on a slide glass.

### Description of the Background Art

A blood image analyzing system for observing a white blood cell in a blood specimen smeared on a slide glass is known in general, as disclosed in U.S. Patent Application Publication No. 2007/0077550, for example. This U.S. Patent Application Publication No. 2007/0077550 discloses a blood image analyzing system capable of imaging a blood specimen smeared on a specimen plate (slide glass) to obtain a cell image including a white blood cell and other blood cells and displaying the cell image on a display. Further, an automatic blood cell analyzer (HEG-50S manufactured by Sysmex Corporation) capable of taking an image for monitoring white blood cell for observing a white blood cell in a blood specimen and an image for monitoring red blood cell for observing a red blood cell in the blood specimen is known. This automatic blood cell analyzer is so formed as to take the image for monitoring white blood cell and the image for monitoring red blood cell separately.

In a testing industry where the sample smeared on the slide glass is imaged to be analyzed, there is a demand for observing not only the white blood cell in the sample but also the red cell in the sample.

In the blood image analyzing system described in the aforementioned U.S. Patent Application Publication No.2007/0077550, however, it is difficult to monitor both of the white blood cell and the red blood cell employing the cell image including the white blood cell and a large number of other blood cells displayed on the display.

In the aforementioned automatic blood cell analyzer (HEG-50S), the image for monitoring white blood cell and the image for monitoring red blood cell are separately taken, and hence both of a time required for taking the image for monitoring white blood cell and a time required for taking the image for monitoring red blood cell are needed. Consequently, image processing of one blood specimen requires a long time.

US 2006/0109343 A1 relates to an image displaying system, an image providing apparatus, an image displaying apparatus and a computer-readable recording medium.

WO 02/057997 A1 relates to a method and arrangement for segmenting white blood cells in a digital colour image.

DE 3503475 A1 discloses an automatic analysis system of blood cells.

Piuri, V. and Scotti, F., "Morphological Classification of Blood Leucocytes by Microscopy Images". Proc. IEEE Intl. Conf. on Computational Intelligence for Measurement Systems and Application 2004, discloses the automated detection and classification of leucocytes by microscopy images.

### SUMMARY OF THE INVENTION

A cell image processing apparatus according to a first aspect of the present invention is defined in claim 1.

A cell image displaying system according to a second aspect of the present invention is defined in claim 9.

A cell image displaying method according to a third aspect of the present invention is defined in claim 12.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing surroundings of an image processing section of a blood cell image processing system according to an embodiment of the present invention;
Fig. 2 is a block diagram showing the overall structure of the blood cell image processing system according to the embodiment shown in Fig. 1;
Fig. 3 is a block diagram showing an automatic microscope and the image processing section of the blood cell image processing system according to the embodiment shown in Fig. 1;
Fig. 4 is a diagram for illustrating the structure of the automatic microscope of the blood cell image processing system according to the embodiment of the present invention shown in Fig. 1;
Fig. 5 is a block diagram showing an automatic microscope control section of the automatic microscope of the blood cell image processing system according to the embodiment shown in Fig. 1;
Fig. 6 is a block diagram showing a review terminal of the blood cell image processing system according to the embodiment shown in Fig. 1;
Fig. 7A to 7C is a flow chart for illustrating respective operations of the automatic microscope, the image processing section and the review terminal of the blood cell image processing system according to the embodiment shown in Fig. 1;
Fig. 8 is a flow chart for illustrating slide scanning/white blood cell detecting processing at a step S6 of the operation by the automatic microscope shown in Fig. 7A;
Fig. 9 is a flow chart for illustrating image capturing/classifying processing at a step S16 of the operation by the image processing section shown in Fig. 7B;
Fig. 10 is a flow chart for illustrating review processing at a step S39 of an operation by the review terminal shown in Fig. 7C;
Fig. 11 is a diagram for illustrating the operation of the automatic microscope of the blood cell image processing system according to the embodiment shown in Fig. 1;
Fig. 12 is a diagram showing a sample information list screen displayed on a display section of the review terminal of the blood cell image processing system according to the embodiment shown in Fig. 1;
Fig. 13 is a diagram showing a white blood cell review screen displayed on the display section of the review terminal of the blood cell image processing system according to the embodiment shown in Fig. 1;
Fig. 14 is a diagram showing a red blood cell review screen displayed on the display section of the review terminal of the blood cell image processing system according to the embodiment shown in Fig. 1;
Fig. 15 is a flow chart for illustrating order setting processing in the image processing section of the blood cell image processing system according to the embodiment shown in Fig. 1;
Fig. 16 is a diagram showing an order set screen displayed on a display section of the image processing section of the blood cell image processing system according to the embodiment shown in Fig. 1;
Fig. 17 is a flow chart for illustrating review screen setting processing in the review terminal of the blood cell image processing system according to the embodiment shown in Fig. 1;
Fig. 18 is a diagram showing a display set screen displayed on the display section of the review terminal of the blood cell image processing system according to the embodiment shown in Fig. 1;
Fig. 19 is a diagram showing another white blood cell review screen displayed on the display section of the review terminal of the blood cell image processing system according to the embodiment shown in Fig. 1;
Fig. 20 is a diagram showing an exemplary large area image captured in the image processing section; and
Fig. 21 is a diagram showing an exemplary portion image extracted from the large area image.

### DESCRIPTION OF THE PREFERRED EMBODIMENTS

An embodiment of the present invention will be hereinafter described with reference to the drawings.

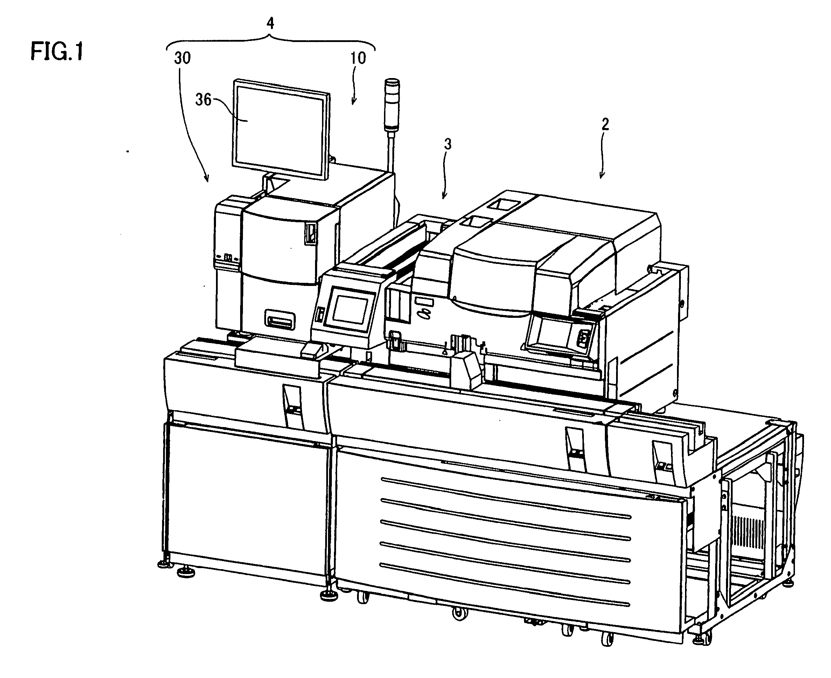

The structure of a blood cell image processing system 1 according to the embodiment of the present invention will be now described with reference to Figs. 1 to 6. The embodiment of the present invention is applied to the blood cell image processing system 1 which is an exemplary cell image processing system.

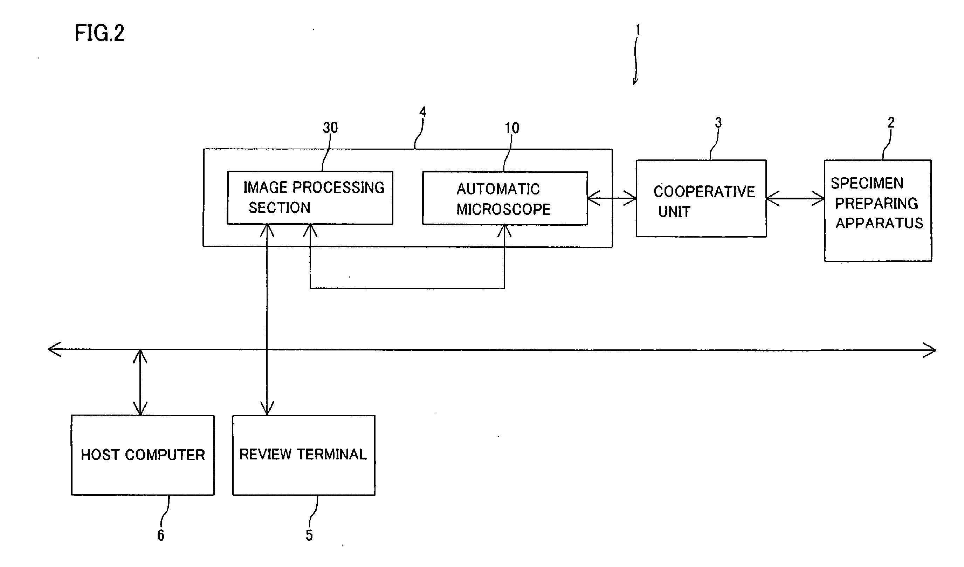

The blood cell image processing system 1 according to the embodiment of the present invention comprises a specimen preparing apparatus 2, a cooperative unit 3, an automatic analyzer 4, a review terminal 5 (see Fig. 2) and a host computer 6 (see Fig. 2), as shown in Figs. 1 and 2.

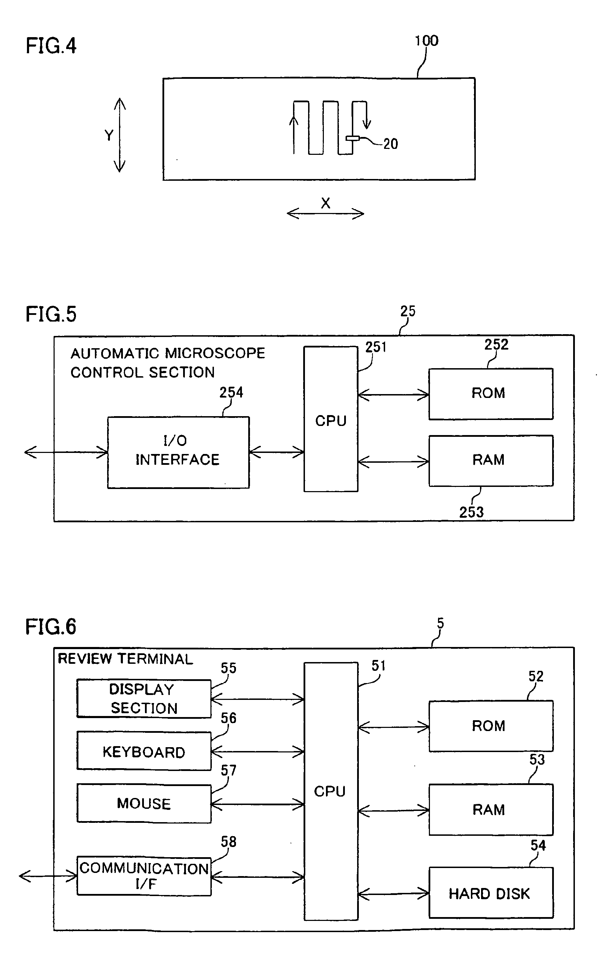

The specimen preparing apparatus 2 is provided for preparing a blood smear specimen by smearing blood on a slide glass 100 (see Fig. 4).

The cooperative unit 3 is provided for receiving the slide glass 100 smeared with the blood from the specimen preparing apparatus 2 to feed the slide glass 100 into an automatic microscope 10, described later, of the automatic analyzer 4.

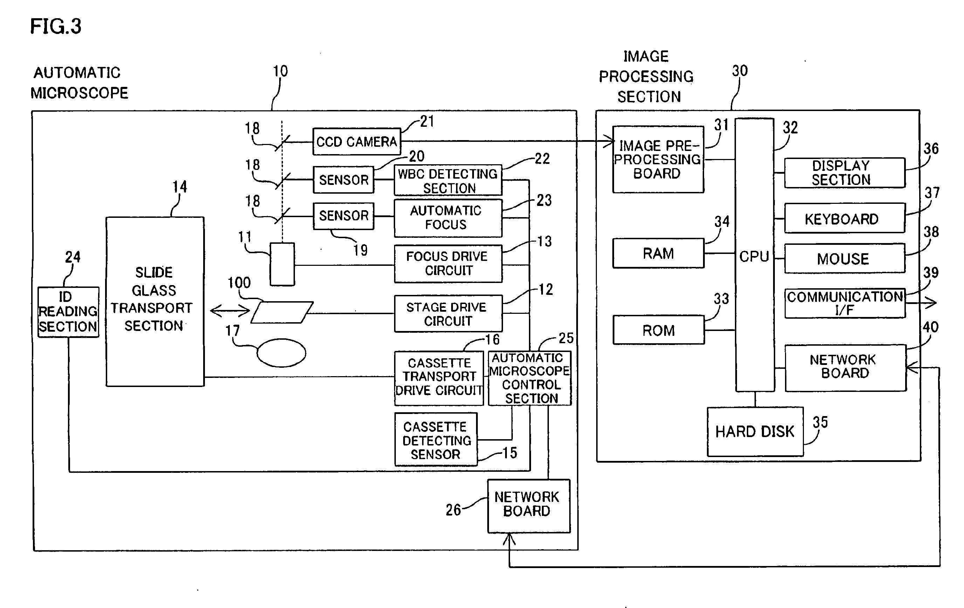

The automatic analyzer 4 includes an automatic microscope 10 and an image processing section 30 as shown in Figs. 2 and 3. The automatic microscope 10 has a function of taking an enlarged image of a blood specimen brought into focus by automatic focusing. Additionally, the automatic microscope 10 includes an objective lens 11, a stage drive circuit 12, a focus drive circuit 13 and a slide glass transport section 14 and a cassette sensor 15. The automatic microscope 10 further includes a cassette transport drive circuit 16, a lamp 17, three half mirrors 18, an automatic focusing sensor 19, a white blood cell (WBC) detecting sensor 20 and a CCD camera 21. The automatic microscope 10 further includes a white blood cell (WBC) detecting section 22, an automatic focus 23, an ID reading section 24 and an automatic microscope control section 25. The automatic microscope 10 is connected to the image processing section 30 through a network board 26.

The objective lens 11 is enabled to enlarge/reduce an image of blood smeared on the slide glass 100 by being moved in a vertical direction by the focus drive circuit 13. As shown in Fig. 4, the stage drive circuit 12 has a function of moving the slide glass 100 along arrow X and along arrow Y. The slide glass transport section 14 is so formed as to contain the slide glass 100, take out the slide glass 100 from a slide cassette (not shown) received from the cooperative unit 3 and move the slide glass 100 to a prescribed position opposed to the objective lens 11. The cassette sensor 15 is provided for detecting presence/absence of the slide cassette containing the slide glass 100. The cassette transport drive circuit 16 has a function of transporting the slide cassette.

The lamp 17 is arranged on a side opposite to the objective lens 11 (below the slide glass 100) with respect to the slide glass 100 transported to the prescribed position opposed to the objective lens 11. The lamp 17 emits light from below the slide glass 100 toward the objective lens 11 (above) so that the light is transmitted through the blood specimen smeared on the slide glass 100. The three half mirrors 18 are arranged on an optical path of the light emitted from the lamp 17. The automatic focusing sensor 19 and the white blood cell (WBC) detecting sensor 20 are line sensors and formed so as to detect light through the half mirrors 18. The CCD camera 21 is so formed as to continue to take images of the blood specimen together with the light received from the lamp 17 through the half mirrors 18 and to transmit the taken images to the image processing section 30 during slide scanning/white blood cell detecting processing described later. The white blood cell (WBC) detecting section 22 is so formed as to detect a white blood cell (WBC) on the basis of the light detected by the white blood cell (WBC) detecting sensor 20. The automatic focus 23 is so formed as to operate an automatic focusing function on the basis of the light detected by the automatic focusing sensor 19. The ID reading section 24 has a function of reading a slide ID from a bar code (not shown) stuck on the slide glass 100 taken out from the slide cassette (not shown). The slide ID is unique identification information allocated to correspond to a sample smeared on each slide glass 100 on one-on-one basis.

The automatic microscope control section 25 is so formed as to control each section of the automatic microscope 10. Further, the automatic microscope control section 25 includes a CPU 251, a ROM 252, a RAM 253 and an I/O interface 254, as shown in Fig. 5. Furthermore, the automatic microscope control section 25 is connected to each section of the automatic microscope 10 through the I/O interface 254. The CPU 251 can run computer programs stored in the ROM 252 and computer programs loaded in the RAM 253. The CPU 251 is so formed as to transmit an image-capturing signal to an image processing section 30 through the I/O interface 254 and the network board 26 when a white blood cell detecting section 22 detects a white blood cell. The ROM 252 is constituted by a mask ROM, a PROM, an EPROM, an EEPROM or the like. The RAM 253 is constituted by a SPRAM, a DRAM, or the like. The RAM 253 is employed for reading the computer programs recorded in the ROM 252. Further, the RAM 253 is utilized as a working area of the CPU 251 when running these computer programs.

The network board 26 is so formed as to be compatible with 100Base-TX of Ethernet (registered trademark), for example, and can transmit/receive data of apparatus administrative communication to/from the network board 40 of the image processing section 30.

The image processing section 30 has a function of capturing the image taken by the automatic microscope 10 and a function of analyzing the captured image and automatically classifying cells. As hereinabove described, the CCD camera 21 continues to transmit the images of the blood specimen to the image processing section 30 during slide scanning/white blood cell detecting processing described later, and the image processing section 30 is so formed as to capture the image taken by the automatic microscope 10 when receiving the image-capturing signal from the automatic microscope 10. The image processing section 30 includes an image preprocessing board 31, a CPU 32, a ROM 33, a RAM 34, a hard disk 35, a display section 36, and a keyboard 37 and a mouse 38 as input devices. The image processing section 30 is connected to the host computer 6 and the review terminal 5 through the communication interface 39 and connected to the automatic microscope 10 through the network board 40.

The image preprocessing board 31 has a function of receiving an image signal of the image taken by the CCD camera 21 of the automatic microscope 10 and performing preprocessing, such as color correction or gamma correction (processing for correcting color saturation or brightness of an image), on the received image signal.

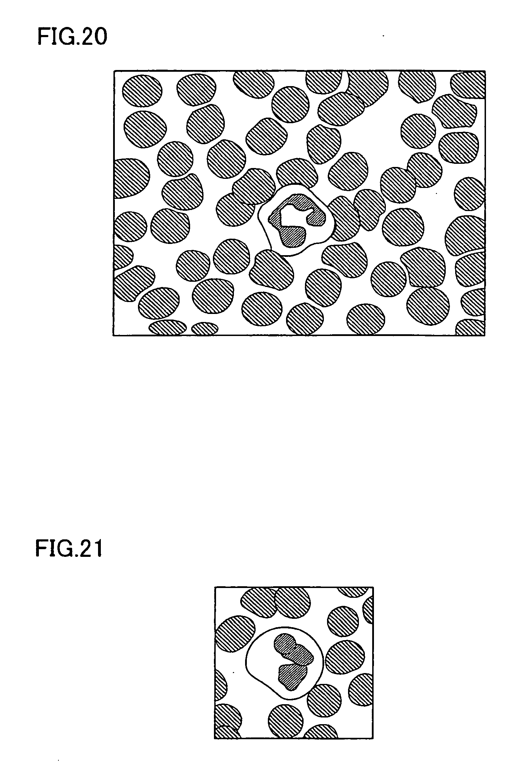

The CPU 32 can run computer programs stored in the ROM 33 and the hard disk 35 and computer programs loaded in the RAM 34. The CPU 32 is so formed as to capture an area including a white blood cell and a plurality of red blood cells surrounding the white blood cell imaged by the CCD camera 21 as a large area image through the image preprocessing board 31 when receiving the image-capturing signal from the automatic microscope 10. Fig. 20 shows an exemplary captured large area image. Further, the CPU 32 is so formed as to extract a portion image to include only one white blood cell from the captured large area image. Fig. 21 shows an exemplary portion image extracted from the large area image. The CPU 32 verifies whether or not the blood cell of the extracted portion image is a white blood cell and performs automatic classification of the white blood cell. More specifically, the CPU 32 is enabled to classify white blood cells into six types of band-form neutrophils (Band), segmented neutrophils (Seg), eosinophils (Eosin), basophils (Baso), lymphocytes (Lymph) and monocytes (Mono) as normal white blood cells and to classify the same into five types of atypical lymphocytes (A-Lymp), immature granulocytes (Imm), blasts (Blast), erythroblasts (Ebl) and unclassified cells (Unclass) as abnormal white blood cells.

The ROM 33 is constituted by a mask ROM, a PROM, an EPROM, an EEPROM or the like, and the computer programs run by the CPU 32 and data employed therefor are recorded therein.

The RAM 34 is constituted by a SPRAM, a DRAM, or the like. The RAM 34 is employed for reading the computer programs recorded in the ROM 33 and the hard disk 35. Further, the RAM 34 is utilized as a working area of the CPU 32 when running these computer programs.

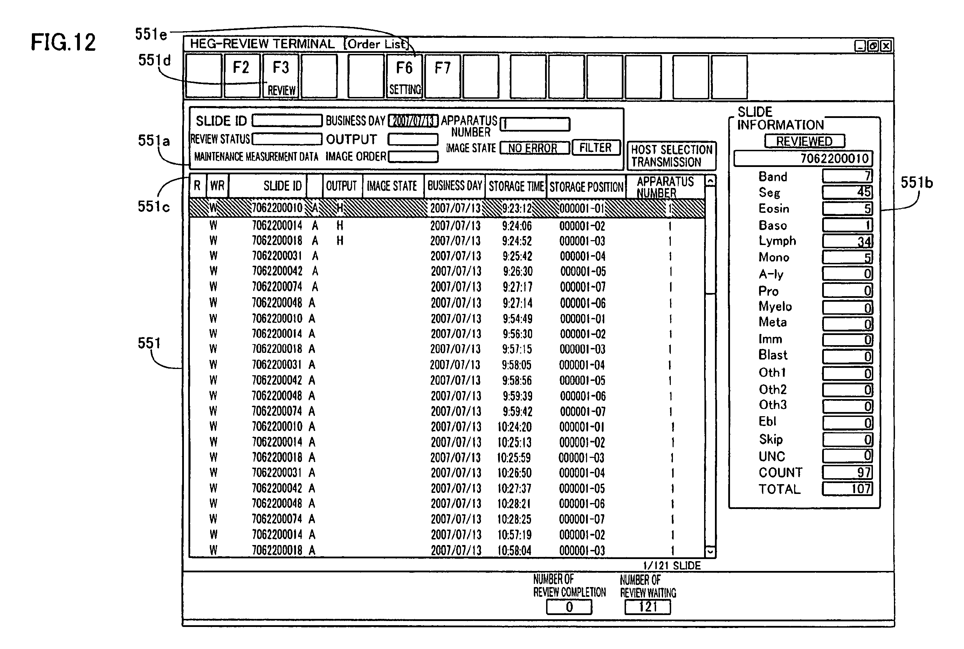

An operating system and various computer programs such as application programs to be run by the CPU 32 as well as data employed for running the computer programs are installed in the hard disk 35. A control program for capturing the image taken by the automatic microscope 10 and analyzing the captured image to automatically classify the cell is also installed in this hard disk 35. A large area image database for storing the large area image obtained by the CPU 32, a portion image database for storing the portion image obtained by the CPU 32, a blood cell type database for storing information on the blood cell types of the white blood cells classified by the CPU 32, a review information database for storing review information on white blood cells and red blood cells input by an user in the review terminal 5 and a list displaying database for storing various information displayed on a sample information list screen 551 (see Fig. 12) described later are also installed in the hard disk 35.

Further, an operating system such as Windows (registered trademark) manufactured and sold by Microsoft, U.S.A., for example, providing graphical user interface environment is installed in the hard disk 35.

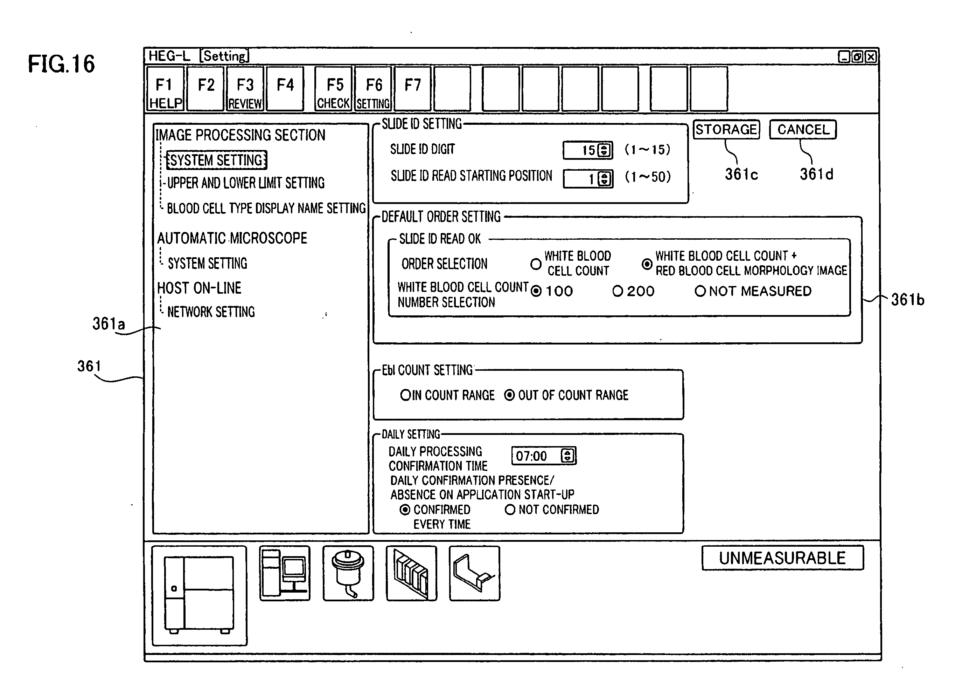

The display section 36 is enabled to display an order set screen 361 (see Fig. 16) of the automatic microscope 10 and the image processing section 30 and the user can perform the setting of the automatic microscope 10 and the image processing section 30 from the order set screen 361 with the keyboard 37 and the mouse 38. The communication interface 39 is Ethernet (registered trademark) interface, for example. The network board 40 is so formed as to be compatible with 100Base-TX of Ethernet (registered trademark), for example.

The review terminal 5 is provided for checking the results of automatic classification of the blood cell types of the white blood cells by the image processing section 30 or manually classify the blood cell image, the type of which can not be determined by the automatic classification. Also when a plurality of the image processing sections 30 are provided, the review terminal 5 can review data of each image processing section 30 through a network such as a LAN. The review terminal 5 is constituted by a personal computer (PC) or the like, and includes a CPU 51, a ROM 52, a RAM 53, a hard disk 54, a display section 55, a keyboard 56 and a mouse 57 as an input device and a communication interface 58, as shown in Fig. 6.

The CPU 51 can run computer programs stored in the ROM 52 and computer programs loaded in the RAM 53.

The ROM 52 is constituted by a mask ROM, a PROM, an EPROM, an EEPROM or the like, and the computer programs run by the CPU 51 and data employed therefor are recorded therein.

The RAM 53 is constituted by an SRAM or a DRAM. The RAM 53 is employed for reading the computer programs recorded in the ROM 52 and the hard disk 54. Further, the RAM 53 is utilized as a working area of the CPU 51 when running these computer programs.

An operating system and various computer programs such as application programs to be run by the CPU 51 as well as data employed for running the computer programs are installed in the hard disk 54. A control program for checking the results of automatic classification of the blood cell types of the white blood cells is also installed in this hard disk 54.

Further, an operating system such as Windows (registered trademark) manufactured and sold by Microsoft, U.S.A., for example, providing graphical user interface environment is installed in the hard disk 54.

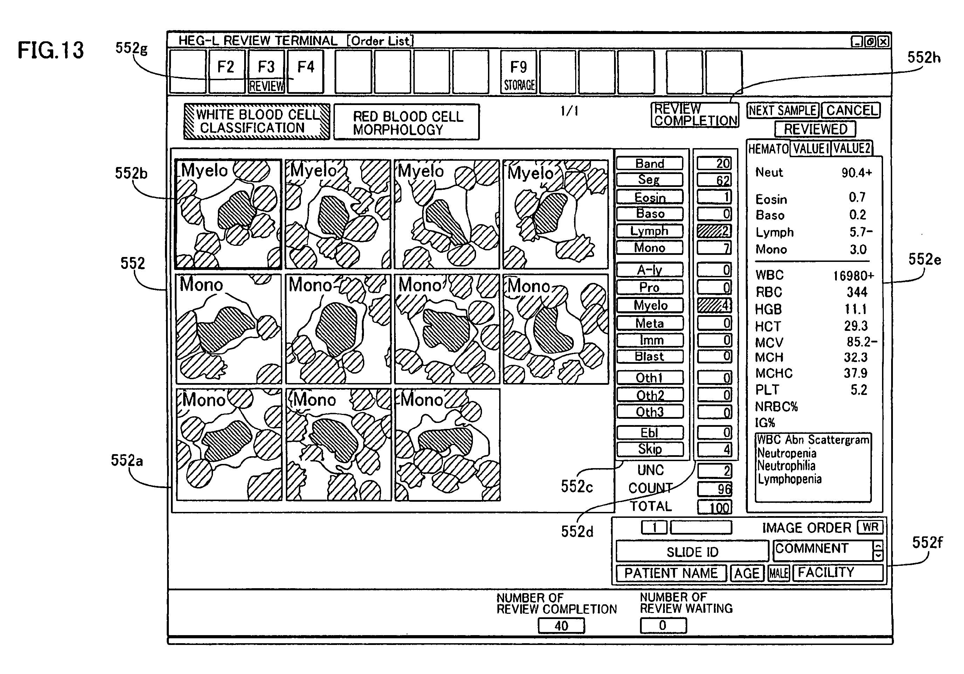

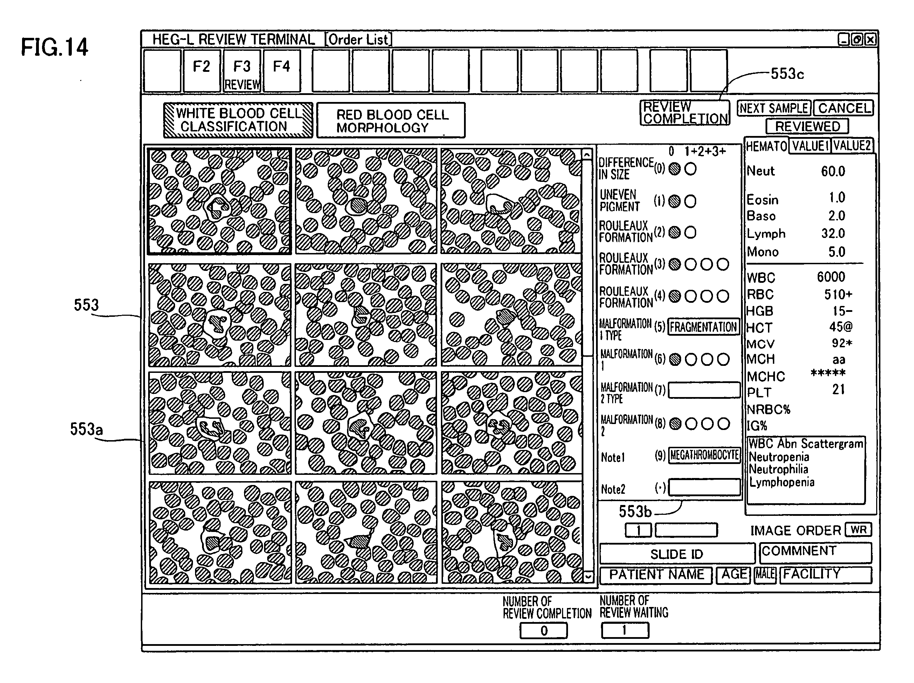

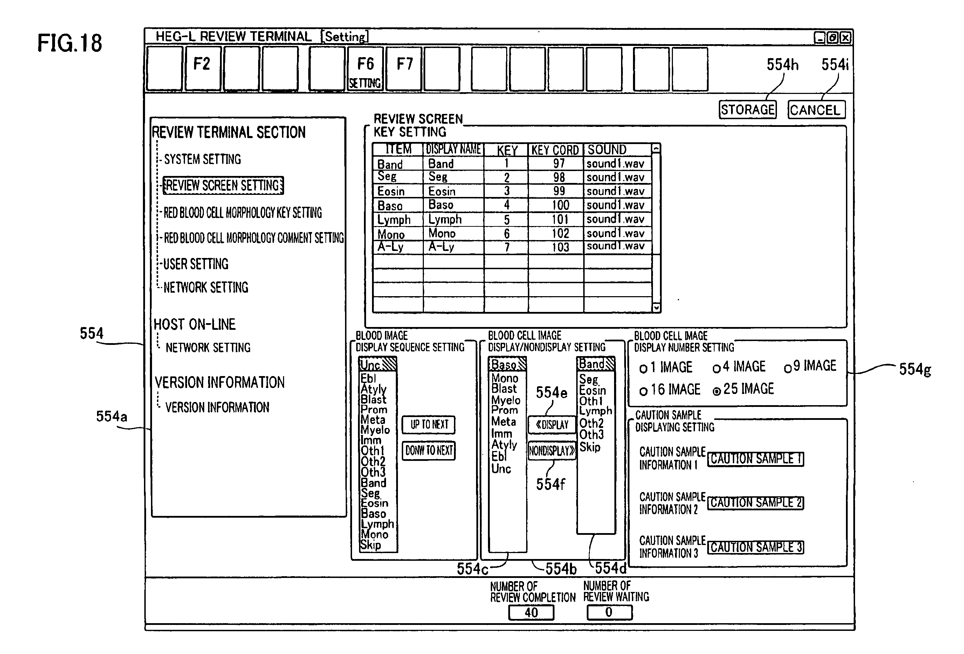

The display section 55 is enabled to display a white blood cell review screen 552 (see Fig. 13) for reviewing white blood cells and a red blood cell review screen 553 (see Fig. 14) for reviewing red blood cells. The user can perform the display setting of each screen from a display set screen 554 (see Fig. 18) displayed on the display section 55 with the keyboard 56 and the mouse 57.

The communication interface 58 is Ethernet (registered trademark) interface, for example. The review terminal 5 can transmit/receive data to/from the host computer 6 and the image processing section 30 by this communication interface 58 with a prescribed communication protocol.

The host computer 6 has a function of transmitting information of the sample corresponding to the slide ID to the image processing section 30 in response to a demand from the image processing section 30. The host computer 6 is so formed as to receive information on the check of the results of automatic classification performed in the review terminal 5 by the user and information on the results of manual classification by the user and store the same.

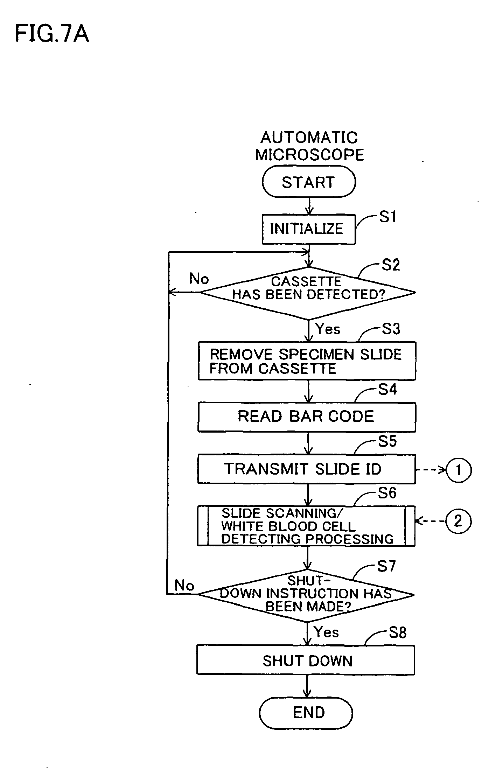

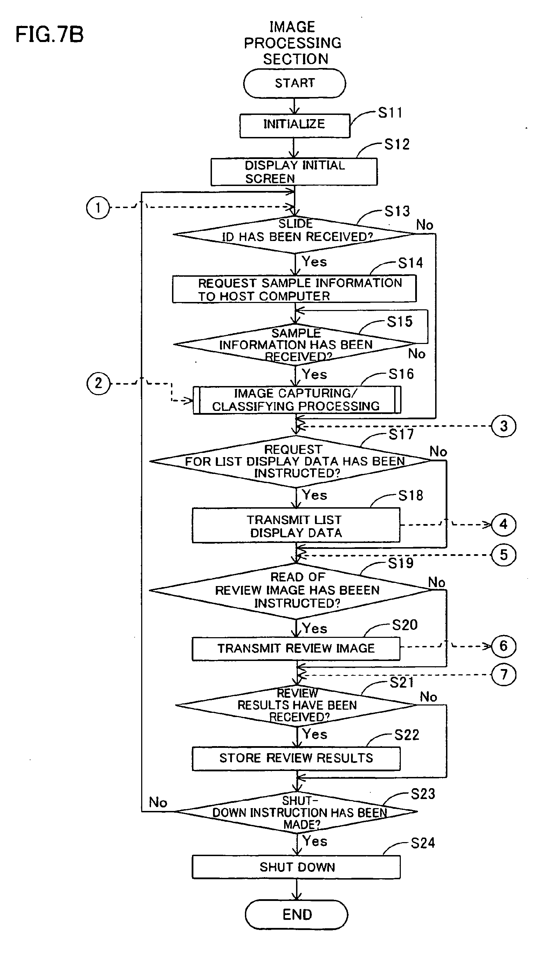

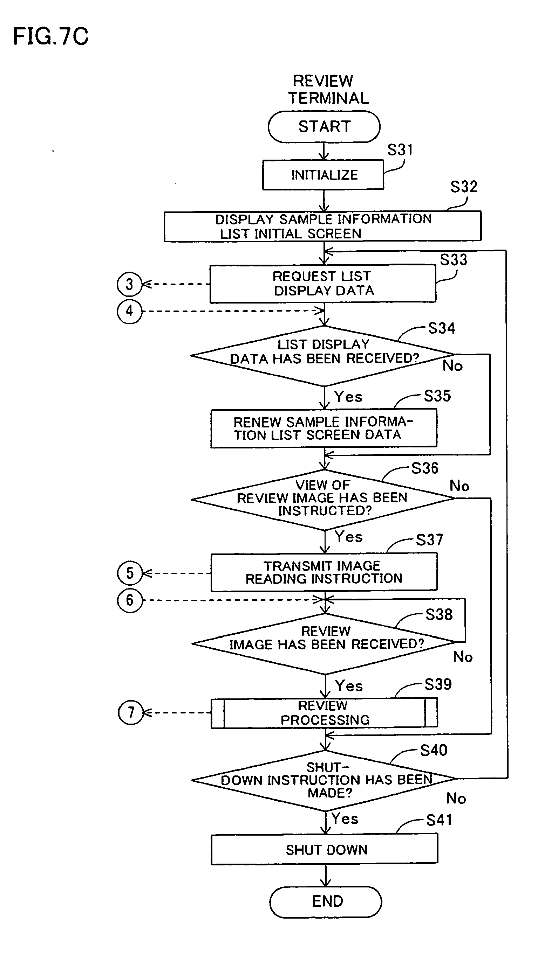

Respective operations of the automatic microscope 10, the image processing section 30 and the review terminal 5 of the blood cell image processing system 1 according to this embodiment will be now described with reference to Figs. 7 to 14.

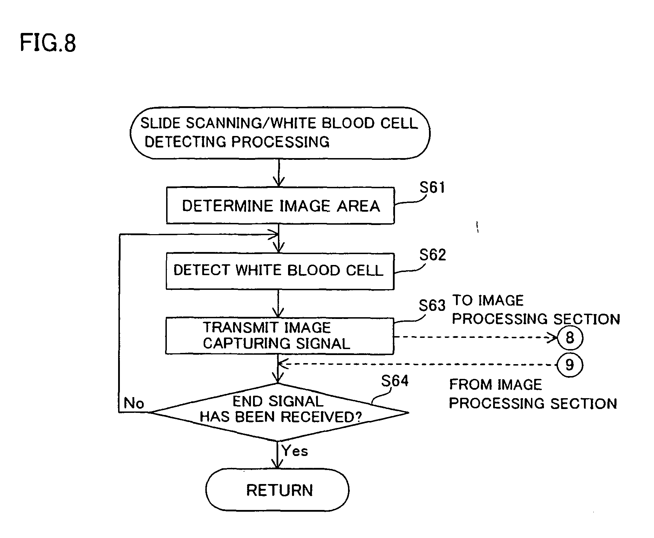

In the automatic microscope 10, the CPU 251 of the automatic microscope control section 25 first initializes a computer program at a step S1 shown in Fig. 7A. At a step S2, the CPU 251 determines whether or not the cassette sensor 15 has detected presence/absence of the slide cassette (not shown) containing the slide glass 100 and this determination is repeated until the slide cassette is detected. When detecting the slide cassette, the slide glass transport section 14 takes out the slide glass 100 from the slide cassette at a step S3. Then the ID reading section 24 reads the slide ID from the bar code stuck on the taken-out slide glass 100 at a step S4, and information of the slide ID which was read is transmitted to the image processing section 30 through the network board 26 at a step S5. Thereafter slide scanning/white blood cell detecting processing is performed at a step S6. When the slide scanning/white blood cell detecting processing at the step S6 starts, the CCD camera 21 of the automatic microscope 10 starts an imaging operation and starts transmitting a taken image to the image processing section 30. The imaging/image transmitting operation by the CCD camera 21 is continuously performed until the slide scanning/white blood cell detecting processing of the step S6 ends. The slide scanning/white blood cell detecting processing by the automatic microscope 10 will be now described with reference to Fig. 8.

First, an imaging area is determined for obtaining an optimum scanning start position at a step S61 in Fig. 8. This is because there is a possibility that the blood specimen smeared on the slide glass 100 has a blood cell density varying according to the smeared position, and is incorrectly detected (a clot of the red blood cell is incorrectly detected as a nucleus of the white blood cell, for example) when the blood cell density is not proper. More specifically, a check area and a check interval in the blood specimen smeared on the slide glass 100 are previously determined and the stage drive circuit 12 moves the slide glass 10 so that the CCD camera 21 scans the check area. The blood cell density is checked at a prescribed point every check interval and the imaging area is determined on the basis of the results of check.

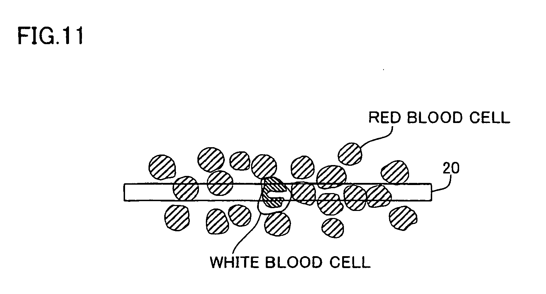

Thereafter the white blood cell is detected in the determined imaging area at a step S62. The white blood cell (WBC) detecting section 22 detects the white blood cell on the basis of light detected by the sensor 20 employed as the line sensor. More specifically, the stage drive circuit 12 moves the slide glass 100 along arrow X and arrow Y, so that the sensor 20 scans the imaging area in a zigzag, as shown in Fig. 4. Then, the white blood cell (WBC) detecting section 22 distinguishes between the white blood cell (WBC) and the red blood cell (RBC) by utilizing a property of the nucleus of the white blood cell (WBC) which absorbs a large amount of red components of the light as compared with the red blood cell (RBC), to detect the white blood cell (WBC) (see Fig. 11).

When the white blood cell (WBC) detecting section 22 detects the white blood cell, the CPU 251 transmits an image-capturing signal to the image processing section 30 at a step S63. Thereafter the CPU 251 determines whether or not an end signal, described later, transmitted from the image processing section 30 has been received at a step S64. When the end signal has not been received, the process advances to the step S62 and an operation of the detecting a new blood cell is performed. When the end signal has been received, the operation of the slide scanning/white blood cell detecting processing ends. When the slide scanning/white blood cell detecting processing is ended, the imaging/image transmitting operation by the CCD camera 21 is stopped.

After the aforementioned slide scanning/white blood cell detecting processing at the step S6 ends, the CPU 251 determines whether or not a shutdown instruction from the user has been made at a step S7 shown in Fig. 7A. When no shutdown instruction has been made, the process advances to the step S2. When the instruction has been made, a shutdown operation is performed at a step S8 and the operation of the automatic microscope 10 is ended.

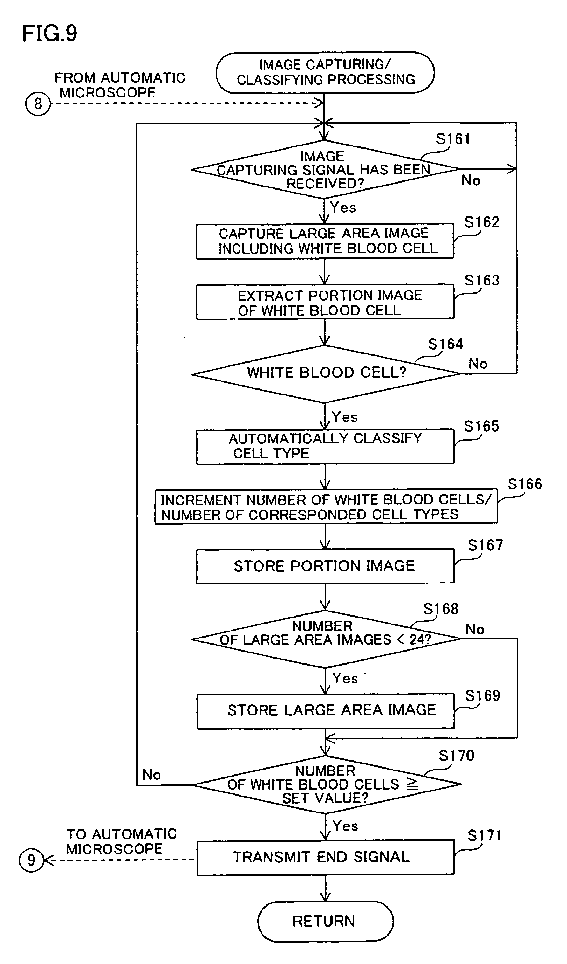

In the image processing section 30, the CPU 32 initializes a computer program at a step S11 and displays an initial screen (not shown) on the display section 36 at a step S12. Then it is determined whether or not the information of the slide ID transmitted from the automatic microscope 10 has been received through the network board 40 at a step S13. When the information of the slide ID has not been received, the process advances to a step S17. When the information of the slide ID has been received, a signal requiring sample information corresponding to the received slide ID is transmitted to the host computer 6 at a step S14, and the CPU 32 determines whether or not the sample information transmitted from the host computer 6 has been received at a step S15. This determination is repeated until the sample information is received, when the sample information has not been received. When the sample information has been received, image capturing/classifying processing is performed at a step S16. The image capturing/classifying processing by the image processing section 30 will be now described with reference to Fig. 9.

At a step S161 shown in Fig. 9, the CPU 32 determines whether or not the image-capturing signal transmitted from the automatic microscope 10 has been received. When having received the image-capturing signal, the CPU 32 captures an area including a white blood cell and a plurality of red blood cells surrounding the white blood cell imaged by the CCD camera 21 as a large area image (640 × 480 pixels) as shown in Fig. 20 through the image preprocessing board 31 at a step S162. The large area image is captured in the image processing section 30 by being temporarily stored in the RAM 34. Then the CPU 32 so extracts a portion image (256 × 256 pixels) as shown in Fig. 21 as to include the single white blood cell from the extracted large area image at a step S163. Thereafter the CPU 32 verifies whether or not the blood cell included in the portion image is a white blood cell at a step S164. In other words, it is verified whether or not the object detected by the white blood cell (WBC) detecting section 22 is a white blood cell. Thus, storage of an image of a dust or the like which is incorrectly detected as a white blood cell can be suppressed. When it is not a white blood cell, the process advances to the step S161. When it is a white blood cell, the CPU 32 automatically classifies the white blood cell included in the portion image as any of the aforementioned six normal sample types and five abnormal sample types at a step S165. Then items of the number of white blood cells and the number of corresponded blood cell types in the blood cell type database of the hard disk 35 are incremented at a step S166. For example, when the CPU 32 classifies the white blood cell as a band-form neutrophil (Band), 1 is added to the number of white blood cells in the blood cell type database of the hard disk 35 and the resulting number of white blood cells is stored while 1 is added to the number of band-form neutrophils (Band) and the resulting number of band-form neutrophils (Band) is stored. Thus, accumulated information of the number of white blood cells and the respective numbers of blood cell types can be stored in the blood cell type database also when a plurality of the white blood cells are detected. Then each portion image is stored in the portion image database of the hard disk 35 in association with the information of the blood cell types automatically classified by the CPU 32 at a step S167.

According to this embodiment, the CPU 32 determines whether or not the number of large area images stored in the large area image database of the hard disk 35 is smaller than 24 at a step S168. When the number of large area images is smaller than 24, the large area image captured through the image preprocessing board 31 is stored in the large area image database of the hard disk 35 at a step S169. When the number of large area images is 24 or more, the process advances to a step S170 without storing the large area image. Thus, it is possible not to needlessly store the large area images for red blood cell, the number of which required for observation may be smaller than the number of images for white blood cell. Consequently, the area of the large area image database occupied in the hard disk 35 can be reduced. Since the large area images are not needlessly stored, the time required for storing the large area images can be reduced.

At the step S170, the CPU 32 determines whether or not the number of detected white blood cells is a set value or more. The set value of the number of white blood cells can be set in the order set screen 361 (see Fig. 16), described later, by the user. When the number of white blood cells does not reach the set value, the process advances to the step S161. When the number of white blood cells is the set value or more, the CPU 32 transmits an end signal for ending the operation of the slide scanning/white blood cell detecting processing in the automatic microscope 10 to the automatic microscope 10 at a step S171. Thereafter the operation of the image capturing/classifying processing is ended.

After performing the aforementioned image capturing/classifying processing at the step S16, the CPU 32 determines whether or not an instruction of requesting data for list display from the review terminal 5 has been made at a step S17 in Fig. 7B.

In the review terminal 5, the CPU 51 initializes a computer program at a step S31. Then, a sample information list initial screen (not shown) is displayed on the display section 55 at a step S32, and a request signal of the data for list display is transmitted to the image processing section 30 at a step S33.

In the image processing section 30, when determining that the instruction of requesting the data for list display has been made at the step S17, the CPU 32 transmits the data for list display to the review terminal 5 through the communication interface 39 at a step S18. When the instruction of requesting the data for list display has not been made, the process advances to a step S19.

In the review terminal 5, on the other hand, the CPU 51 determines whether or not the data for list display has been received at a step S34. The process advances to a step S36 when the data for list display has not been received, while information of a display item 551a of the sample information list screen 551 displayed on the display section 55 is updated at a step S35 as shown in Fig. 12 when the data for list display has been received. The display item 551a of the sample information list screen 551 includes information such as the slide ID, slide storage time, and a slide storage position. When a plurality of the image processing sections 30 are connected to the review terminal 5, the display item 551a further includes display of apparatus number previously allocated to each image processing section 30 so that the user can recognize which image processing section 30 obtains the blood cell in the image. Blood cell type information or count information of the selected sample are displayed on the slide information display area 551b of the sample information list screen 551. The user can select a sample to be displayed on the slide information display area 551b by moving a cursor 551c with the keyboard 56 or the mouse 57. Further, the user can make an instruction of viewing an image for review by double clicking the sample selected by the cursor 551c or pressing a review button 551d.

Then, the CPU 51 determines whether or not the instruction of viewing the image for review has been made from the user at the step S36, and the process advances to a step S40 when the viewing instruction has not been made. When the viewing instruction has been made, an image reading instruction signal is transmitted to the image processing section 30 through the communication interface 58 at a step S37.

In the image processing section 30, it is determined whether or not an instruction of reading the image for review from the review terminal 5 has been made at a step S19. The process advances to a step S21 when the reading instruction has not been made, while data regarding the image for review is transmitted to the review terminal 5 at the step S20 when the reading instruction has been made. More specifically, various data stored in the large area image database, the portion image database, the blood cell type database and the review information database of the hard disk 35 are transmitted to the review terminal 5 through the communication interface 39.

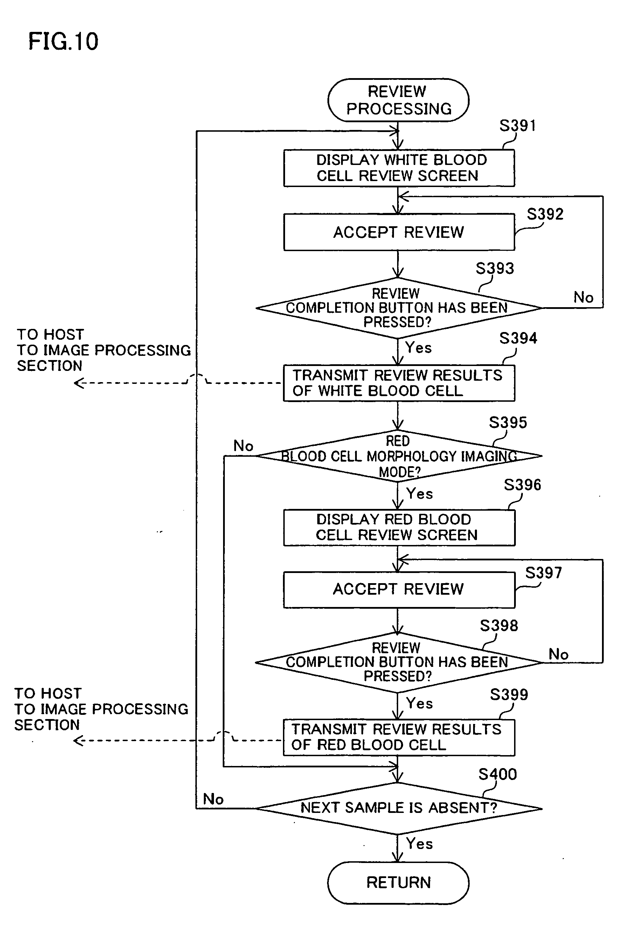

In the review terminal 5, the CPU 51 determines whether or not the data regarding the image for review transmitted from the image processing section 30 has been received at a step S38 and this determination is repeated until the data is received. When the data regarding the image for review has been received, review processing is performed at a step S39. The review processing by the review terminal 5 will be now described with reference to Fig. 10.

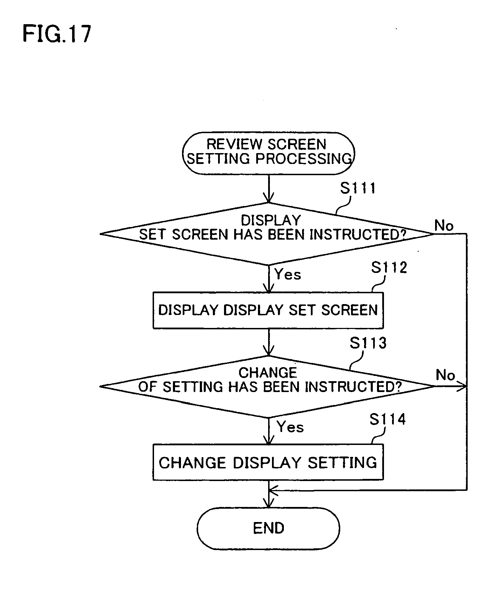

At a step S391 in Fig. 10, the white blood cell review screen 552 is displayed on the display section 55 as shown in Fig. 13. The results of automatic classification or the blood cell images of the sample selected by the user in the viewing instruction at the step S36 are displayed on the white blood cell review screen 552. More specifically, the blood cell images of the blood cell types previously set in review screen setting processing (see Fig. 17), described later, are displayed in a white blood cell image display area 552a. This blood cell images are the portion images stored in the portion image database of the image processing section 30. In other words, the portion images of the portion image database are displayed on the white blood cell review screen 552, while no large area image of the large area image database is displayed thereon. When the user clicks the blood cell type button 552c, the blood cell type of the blood cell image corresponding to a position of a cursor 552b in the white blood cell image display area 552a is changed to the blood cell type of the clicked button. Thus, the user can manually classify the blood cell type. The number of each blood cell type is displayed in a counting box 552d. The results of measurement of a blood analyzer (not shown), for example, transmitted from the host computer 6 are displayed in a hematological data display area 552e. The slide ID or the patient name of the displayed sample are displayed in the patient information display box 552f. When the user presses a display switching button 552g, the red blood cell review screen 553, described later, is displayed on the display section 55 by switching from the white blood cell review screen 552. Even when a red blood cell morphology imaging mode described later is not set, the white blood cell review screen 552 is switched to the red blood cell review screen 553 by pressing the display switching button 552g. In this case, however, input of the review information of the red blood cell by the user can not be accepted.

The review (manual classification) of the white blood cells by the user is accepted at a step S392 and it is determined whether or not a review completion button 552h has been pressed by the user at a step S393. The process advances to the step S392 when the review completion button 552h has not been pressed, while the review results of the white blood cells are transmitted to the host computer 6 and the image processing section 30 respectively at a step S394 when the review completion button 552 has been pressed. Then the review results of the white blood cells are stored in the host computer 6 and the image processing section 30 respectively. In other words, the review terminal 5 can accept input of the information (manual classification) regarding the cell type of the white blood cell included in each portion image through the white blood cell review screen 552.

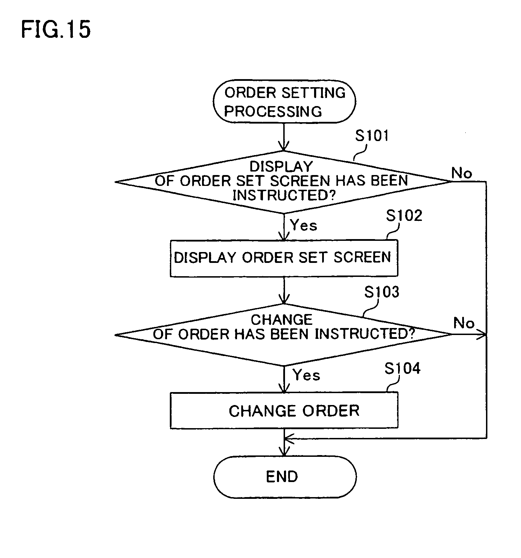

According to this embodiment, the CPU 51 determines whether or not the red blood cell morphology imaging mode has been set at a step S395. The red blood cell morphology imaging mode can previously set by the user in order setting processing (see Fig. 15) described later. The process advances to a step S400 when the red blood cell morphology imaging mode has not been set, while the red blood cell review screen 553 is displayed on the display section 55 at a step S396 as shown in Fig. 14 when the red blood cell morphology imaging mode has been set. Images for red blood cell morphology view of the sample selected by the user in the viewing instruction at the step S36 is displayed on the red blood cell review screen 553. More specifically, the large area images stored in the large area image database of the image processing section 30 are displayed in a red blood cell image display area 553a. In other words, the large area images of the large area image database are displayed on the red blood cell review screen 553 while no portion image of the portion image database is displayed. Columns of classification comment items and classification comment results are provided in a classification comment display area 553b, and the user can select or describe the comment results for the respective classification comment items. Thus, the user can manually determine the morphology information of the red blood cells. A hematological data display area, a patient information display box and a screen switching button are also provided in the red blood cell review screen 553 similarly to the white blood cell review screen 552.

The review of the red blood cells (determination of the morphology information) by the user is accepted at a step S397 and it is determined whether or not a review completion button 553c has been pressed by the user at a step S398. The process advances to the step S397 when the review completion button 553c has not been pressed, while the review results of the red blood cell are transmitted to the host computer 6 and the image processing section 30 at a step S399 when the review completion button 553c has been pressed. The review results of the red blood cells are stored in the host computer 6 and the image processing section 30 respectively. In other words, the review terminal 5 can accept input of the information regarding the morphology of the red blood cell included in each large area image through the red blood cell review screen 553. Thereafter the CPU 51 determines whether or not a next sample (having one digit lower than the sample selected by the user on the sample information list screen 551 in the viewing instruction at the step S36) exists at a step S400, and the review processing is ended when the next sample does not exist. When the sample exists, the process advances to the step S391 and the white blood cell review screen 552 of the next sample is displayed.

After ending the aforementioned review processing at the step S39, it is determined whether or not a shutdown instruction from the user has been made at a step S40 shown in Fig. 7C, and the process advances to the step S33 when the shutdown instruction has not been made. When the shutdown instruction has been made, the shutdown operation is performed at a step S41 and the operation of the review terminal 5 is ended.

In the image processing section 30, after the images for review are transmitted at the step S20, it is determined whether or not the review results of the white blood cells or the review results of the red blood cells transmitted from the review terminal 5 have been received at step S21. When the review results have been received, the received review results are stored in the hard disk 35 at a step S22. At this time, the review results of the white blood cells are separately stored in the hard disk 35 without overwriting the results automatically classified by the CPU 32. Thus, both of the results by the automatic classification and the results by the manual classification are stored in the hard disk 35. When the review results have not been received, it is determined whether or not a shutdown instruction from the user has been made at a step S23. When the shutdown instruction has not been made, the process advances to the step S13. When the shutdown instruction has been made, the shutdown operation is performed at a step S24 and the operation of the image processing section 30 is ended. Although a flowchart of Fig 7A to 7C shows that, the presence/absence of the instruction of viewing the image for review is determined and the review processing is performed after requiring the data for list display and updating data of the sample information list screen 551 (see Fig. 12) at the step S33 to step S40, the request for the data for list display and the data updating of the sample information list screen 551 are actually continuously performed at the steps S33 to step S40.

The order setting processing in the image processing section 30 of the blood cell image processing system 1 according to this embodiment will be now described with reference to Figs. 15 and 16.

At a step S101 in Fig. 15, the CPU 32 determines whether or not an instruction of displaying an order set screen from the user has been made on the initial screen (not shown) displayed on the display section 36 at a step S12. When no instruction has been made, the operation is ended. When the instruction has been made, the order set screen 361 is displayed on the display section 36 at a step S102 as shown in Fig. 16. Various setting items regarding the image processing section 30 and the automatic microscope 10 are selectively displayed in an item selection column 361a of the order set screen 361.

Check boxes for performing order selection and white blood cell count number selection are provided in the default order setting display area 361b of the order set screen 361. As default values, "white blood cell count + red blood cell morphology image" is selected as to the order selection and "100" is selected as to the white blood cell count number selection. When the "white blood cell count + red blood cell morphology image" is selected, the review of the red blood cells is set in the review terminal 5 in addition to the review of the white blood cells, and it is determined that the red blood cell morphology imaging mode has been set at the aforementioned step S395 in Fig. 10. When the "white blood cell count" is selected, on the other hand, only the review of the white blood cell is set in the review terminal 5 and it is determined that the red blood cell morphology imaging mode is not set at the step S395 in Fig. 10. The white blood cell count number selection is an item for setting the number of white blood cells to be reviewed, which can be selected from three types, i.e., "100", "200" and "not measured". The white blood cell count number set here is employed as a set value of the number of white blood cells at the aforementioned step S170 in Fig. 9. Therefore, the detection of the white blood cell by the automatic microscope 10 and the image capturing by the image processing section 30 are continued until the number of white blood cells detected by the automatic microscope 10 reaches the set value.

It is determined whether or not an instruction of changing an order has been made at a step S103. More specifically, it is determined whether or not a storage button 361c of the order set screen 361 has been pressed by the user, and the change of the order is stored in the hard disk 35 at a step S104 when the storage button 361c has been pressed. When the storage button 361c has not been pressed and a cancel button 361d has been pressed, the order setting processing is ended without change.

The review screen setting processing in the review terminal 5 of the blood cell image processing system 1 according to this embodiment will be now described with reference to Figs. 17 to 19.

First, the CPU 51 determines whether or not an instruction of displaying the display set screen from the user has been made at a step S111 in Fig. 17, and the operation of the review screen setting processing is ended when the instruction has not been made. When the instruction has been made, the display set screen 554 is displayed on the display section 55 at a step S112 as shown in Fig. 18. The user can instruct to display the display set screen by pressing a setting button 551e of the sample information list screen 551 shown in Fig. 12. Various setting items regarding the review terminal 5 are selectively displayed in an item selection column 554a of the display set screen 554.

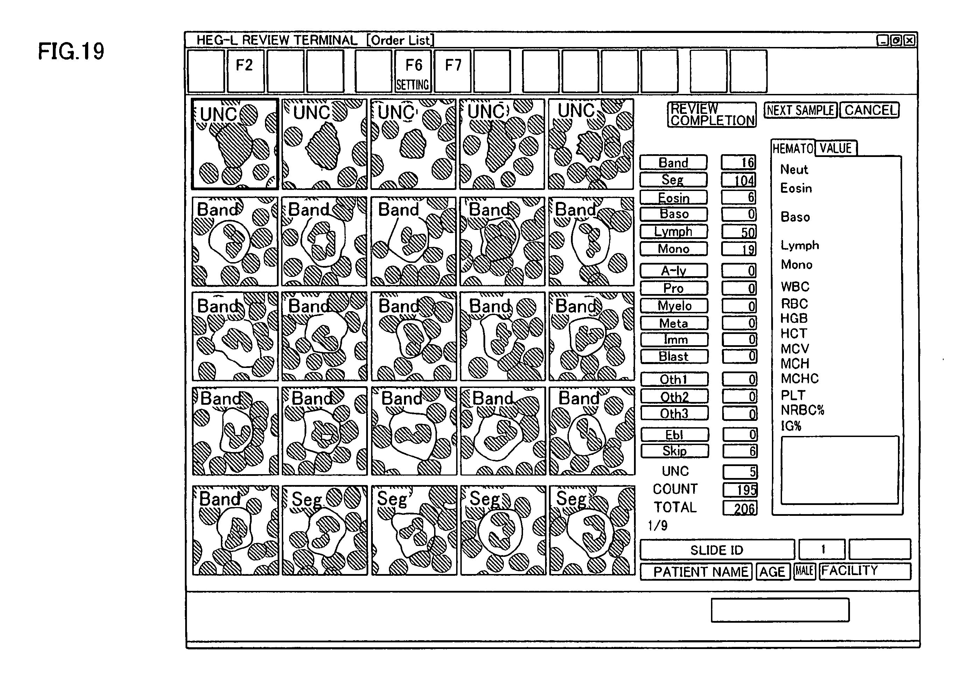

The blood cell types which are displayed and not displayed in the white blood cell image display area 552a (see Fig. 13) of the white blood cell review screen 552 are displayed in the blood cell image display/nondisplay setting column 554b of the display set screen 554 respectively. More specifically, the blood cell types displayed in the display blood cell type column 554c are displayed in the white blood cell image display area 552a and the blood cell types displayed in the nondisplay blood cell type column 554d are not displayed in the white blood cell image display area 552a. Thus, the user can select the blood cell type displayed in the white blood cell image display area 552a with a display button 554e and a nondisplay button 554f. A blood cell image display number setting column 554g is provided on the display set screen 554, and the user can select the number of images displayed in the white blood cell image display area 552a of the white blood cell review screen 552. For example, when the user selects 16 images, the size of the images are so adjusted as to display a maximum of the 16 images in the white blood cell image display area 552a as shown in Fig. 13. When the user selects 25 images, the size of the images are so adjusted as to display a maximum of the 25 images as shown in Fig. 19.

At a step S113, it is determined whether or not a setting change instruction has been made. More specifically, it is determined whether or not a storage button 554h of the display set screen 554 has been pressed by the user. When the storage button 554h has been pressed, the display setting is changed at a step S114. When the storage button 554h is not pressed and a cancel button 554i has been pressed, the review screen setting processing is ended without change.

According to this embodiment, as hereinabove described, the blood cell image processing system 1 comprises the CPU 32 for obtaining the large area image which is obtained by imaging the area detected by the white blood cell detecting section 22, the area including the white blood cell and the plurality of red blood cells surrounding the white blood cell, and for obtaining the portion image including the white blood cell from the large area image, and the hard disk 35 for storing the portion image as the image for monitoring white blood cell and storing the large area image as the image for monitoring red blood cell, whereby the portion image employed as the image for monitoring white blood cell is obtained from the large area image employed as the image for monitoring red blood cell and hence the image for monitoring white blood cell and the image for monitoring red blood cell may not be separately taken. Thus, the white blood cell and the red blood cell can be observed (monitored) using the image for monitoring white blood cell and the image for monitoring red blood cell stored in the hard disk 35, and the time required for imaging the sample can be reduced due to unnecessity of separately taking the image for monitoring white blood cell and the image for monitoring red blood cell.

According to this embodiment, the communication interfaces 39 and 58 are provided in the image processing section 30 and the review terminal 5 respectively, whereby the user can observe (monitor) the white blood cells and the red blood cells by the review terminal 5 even when he is at a place away from the automatic microscope 10 and the image processing section 30.

According to this embodiment, the blood cell types displayed in the white blood cell image display area 552a can be set on the display set screen 554, and hence the user can easily observe only the cell types required for observation.

Although the present invention has been described and illustrated in detail, it is clearly understood that the same is by way of illustration and example only and is not to be taken by way of limitation, the scope of the present invention being limited only by the terms of the appended claims.

For example, while the blood cell images are displayed on the display section of the review terminal in the aforementioned embodiment, the present invention is not restricted to this but the blood cell images may be displayed on the display section of the image processing section and the input of the review information by the user may be accepted by the CPU of the image processing section. In addition, while the review screen setting processing are performed by the CPU of the review terminal, the review screen setting may be performed by the CPU of the image processing section.

While the display section is provided in the image processing section in the aforementioned embodiment, the present invention is not restricted to this but the display section may not be provided in the image processing section so far as the blood cell image can be displayed on the display section of the review terminal.

While twenty-four of the large area images are stored in the hard disk as the image for monitoring red blood cell in the aforementioned embodiment, the present invention is not restricted to this but less than or more than twenty four of the large area images may be stored.

While the image processing section performs automatic classification of the blood cell type of the white blood cell in the aforementioned embodiment, the present invention is not restricted to this but the image processing section may not perform automatic classification of the blood cell type of the white blood cell.

While the images of the white blood cells are displayed on the white blood cell review screen and the images of the red blood cells are displayed on the red blood cell review screen different from the white blood cell review screen in the aforementioned embodiment, the present invention is not restricted to this but both of the images of the white blood cells and the images of the red blood cells may be displayed on a single screen.

While the blood smeared on the slide glass is shown as an exemplary sample in the aforementioned embodiment, the present invention is not restricted to this but bone marrow fluid or urine smeared on the slide glass may be employed as the sample so far as the sample includes the white blood cells and the red blood cells.

## Claims

1. A cell image processing apparatus (4), comprising:
a detector (20) for detecting a plurality of white blood cells in a sample smeared on a slide glass;
a large area image obtainer (21) for obtaining a large area image of each of the plurality of white blood cells detected by the detector by imaging an area including a white blood cell detected by the detector and a plurality of red blood cells surrounding the detected white blood cell;
a processing part (32) for obtaining a portion image including the detected white blood cell from the large area image; and
a memory (35),
**characterised in that** the processing part is configured to perform operations comprising:
obtaining a plurality of the portion images from the plurality of large area images obtained by the large area image obtainer; and
storing a prescribed number of the portion images as the images for monitoring white blood cell in the memory and storing a smaller number of the large area images than the prescribed number as the image for monitoring red blood cell in the memory;
and **in that** the memory (35) stores the portion image as an image for monitoring white blood cell and storing the large area image as an image for monitoring red blood cell.

2. The cell image processing apparatus of claim 1, further comprising a display section (36), wherein
the processing part is configured to control the display section so as to display the large area image and the portion image.

3. The cell image processing apparatus of claim 2, wherein the processing part is configured to control the display section so as to display a first screen, including one of the large area image and the portion image and not including the other of the large area image and the portion image, and a second screen, including the other of the large area image and the portion image and not including the one of the large area image and the portion image.

4. The cell image processing apparatus of claim 2 or 3, wherein
the processing part is configured to accept input of information regarding morphology of the red blood cell included in the large area image through a screen including the large area image displayed on the display section.

5. The cell image processing apparatus of any one of claims 2 to 4, wherein
the processing part is configured to perform operations comprising:
(a) determining a cell type of the white blood cell from a prescribed plurality of cell types on the basis of the portion image;
(b) accepting input of a cell type to be displayed on the display section from the prescribed plurality of cell types; and
(c) controlling the display section to display the portion image when the cell type determined in the operation (a) is the cell type accepted in the operation (b).

6. The cell image processing apparatus of claim 5, wherein
the processing part is configured to accept input of information regarding the cell type of the white blood cell included in the portion image through a screen including the portion image displayed on the display section.

7. The cell image processing apparatus of any one of claims 1 to 6, wherein
the processing part is configured to extract an area, in which only the single white blood cell detected by the detector exists, from the large area image.

8. The cell image processing apparatus of any one of claims 1 to 7, wherein
the processing part is configured to verify whether or not a blood cell detected by the detector is a white blood cell.

9. A cell image displaying system (1) comprising:
a cell image processing apparatus (4) for outputting a cell image obtained by imaging a cell in a sample smeared on a slide glass; and
a monitor terminal (5) connected to the cell image processing apparatus through a network, wherein
the cell image processing apparatus comprises:
a detector (20) for detecting a plurality of white blood cells in the sample smeared on the glass slide;
a large area image obtainer (21) for obtaining a large area image of each of the plurality of white blood cells detected by the detector by imaging an area including a white blood cell detected by the detector and a plurality of red blood cells surrounding the detected white blood cell;
a processing part (32) for obtaining a portion image including the detected white blood cell from the large area image;
a transmitter (39) for transmitting the large area image and the portion image to the monitor terminal, and a memory (35), and wherein
the monitor terminal comprises:
a display section (55); and
a receiver (58) for receiving the large area image and the portion image transmitted from the transmitter;
**characterised in that** the processing part is configured to perform operations comprising:
obtaining a plurality of the portion images from the plurality of large area images obtained by the large area image obtainer; and
storing a prescribed number of the portion images as the images for monitoring white blood cell in the memory and storing a smaller number of the large area images than the prescribed number as the image for monitoring red blood cell in the memory;
**in that** the memory (35) stores the portion image as an image for monitoring white blood cell and storing the large area image as an image for monitoring red blood cell;
and **in that**
the system comprises a controller (51) for controlling the display section so as to display the large area image received by the receiver as an image for monitoring red blood cell and display the portion image received by the receiver as an image for monitoring white blood cell.

10. The cell image displaying system of claim 9, wherein
the controller is configured to control the display section so as to display a first screen, including one of the large area image and the portion image and not including the other of the large area image and the portion image, and a second screen, including the other of the large area image and the portion image and not including the one of the large area image and the portion image.

11. The cell image displaying system of claim 9 or 10, wherein
the controller is configured to accept input of information regarding morphology of the red blood cell included in the large area image through a screen including the large area image displayed on the display section.

12. A cell image displaying method in a cell image processing apparatus (1) comprising steps of:
detecting by a detector (20) of the cell image processing apparatus a plurality of white blood cells in a sample smeared on a slide glass;
obtaining by a large area image obtainer (10) of the cell image processing apparatus a large area image of each of the plurality of white blood cells detected by the detector including the detected plurality of white blood cells and a plurality of red blood cells surrounding the detected white blood cell;
obtaining by a processing part (30) of the cell image processing apparatus a portion image from each of the large area images obtained by the large area image obtainer (10), wherein the portion image includes the detected white blood cell from the large area image;
displaying on a display (36) of the cell image processing apparatus the portion image as an image for monitoring the white blood cell; and
displaying on the display of the cell processing apparatus the large area image as an image for the monitoring red blood cell, the method further comprising;
storing in a memory (35) of the cell image processing apparatus, a prescribed number of the portion images as the images for monitoring white blood cell in the memory 835) and storing a smaller number of the large area images than the prescribed number as the image for monitoring red blood cell in the memory (35).

## Patentansprüche

1. Zellabbildungsverarbeitungsvorrichtung (4), mit:
einem Detektor (20) zum Detektieren einer Vielzahl von weißen Blutzellen in einer auf einen Objektträger geschmierten Probe;
einem Großbereichbildnehmer (21) zum Erhalten eines Großbereichbilds von jeder der Vielzahl der durch den Detektor detektierten weißen Blutzellen, und zwar durch Abbilden eines Bereichs, der eine durch den Detektor detektierte weiße Blutzelle aufweist und eine Vielzahl von roten Blutzellen, die die detektierte weiße Blutzelle umgeben;
einem Verarbeitungsteil (32) zum Erhalten eines Teilbilds, das die von dem Großbereichbild detektierte weiße Blutzelle aufweist; und
einem Speicher (35),
**dadurch gekennzeichnet, dass** der Verarbeitungsteil eingerichtet ist, Operationen auszuführen, umfassend:
Erhalten einer Vielzahl von Teilbildern von der Vielzahl von Großbereichbildern, die durch den Großbereichbildnehmer erhalten worden sind; und
Speichern einer festgelegten Anzahl der Teilbilder in dem Speicher als Abbildungen zum Überwachen einer weißen Blutzelle und Speichern einer kleineren Anzahl der Großbereichbilder als die festgelegte Anzahl in dem Speicher als Abbildung zum Überwachen einer roten Blutzelle;
und **dadurch**, dass der Speicher (35) das Teilbild als Abbildung zum Überwachen einer weißen Blutzelle speichert und speichern des Großbereichbilds als Abbildung zum Überwachen einer roten Blutzelle.

2. Zellabbildungsverarbeitungsvorrichtung nach Anspruch 1, des Weiteren mit einem Anzeigeabschnitt (36), wobei
der Verarbeitungsteil eingerichtet ist, den Anzeigeabschnitt zu steuern, um das Großbereichbild und das Teilbild anzuzeigen.

3. Zellabbildungsverarbeitungsvorrichtung nach Anspruch 2, bei der der Verarbeitungsteil eingerichtet ist, den Anzeigebereich zu steuern, um eine erste Bildschirmabbildung zu zeigen, die das Großbereichbild oder das Teilbild anzeigt aber nicht das jeweils andere, und eine zweite Bildschirmanzeige, die das jeweils andere einschließt, aber nicht das Großbereichbild oder das Teilbild.

4. Zellabbildungsverarbeitungsvorrichtung nach Anspruch 2 oder 3, bei der
der Verarbeitungsteil eingerichtet ist, eine Informationseingabe bezüglich einer Morphologie der roten Blutzelle anzunehmen, die in dem Großbereich durch eine Bildschirmanzeige, die das auf dem Anzeigeabschnitt angezeigte Großbereichbild einschließt, einbezogen ist.

5. Zellabbildungsverarbeitungsvorrichtung nach einem der Ansprüche 2 bis 4, bei der
der Verarbeitungsteil eingerichtet ist, Operationen auszuführen, umfassend:
(a) Bestimmen eines Zelltyps der weißen Blutzelle von einer festgelegten Vielzahl von Zelltypen auf Basis des Teilbilds;
(b) Annehmen einer Eingabe eines auf dem Anzeigebereich anzuzeigenden Zelltyps von der festgelegten Vielzahl von Zelltypen; und
(c) Steuern des Anzeigebereichs, um das Teilbild anzuzeigen, wenn der in der Operation (a) bestimmte Zelltyp der in der Operation (b) angenommene Zelltyp ist.

6. Zellbildverarbeitungsvorrichtung nach Anspruch 5, bei der
der Verarbeitungsteil eingerichtet ist, um eine Informationseingabe bezüglich des Zelltyps der weißen Blutzelle anzunehmen, die in dem Teilbild durch eine Bildschirmanzeige, die das auf dem Anzeigeabschnitt angezeigte Teilbild einschließt, einbezogen ist.

7. Zellabbildungsverarbeitungsvorrichtung nach einem der Ansprüche 1 bis 6, bei der
der Verarbeitungsteil eingerichtet ist, einen Bereich von dem Großbereichbild zu extrahieren, in dem nur die durch den Detektor detektierte einzelne weiße Blutzelle vorhanden ist.

8. Zellabbildungsverarbeitungsvorrichtung nach einem der Ansprüche 1 bis 7, bei der
der Verarbeitungsteil eingerichtet ist, zu verifizieren ob eine durch den Detektor detektierte Blutzelle eine weiße Blutzelle ist oder nicht.

9. Zellabbildungsanzeigesystem (1), mit:
einer Zellabbildungsverarbeitungsvorrichtung (4) zum Ausgeben einer Zellabbildung, die durch Abbilden einer Zelle von einer auf einen Objektträger geschmierten Probe erhalten wurde; und
einem Überwachungsterminal (5), das mit der Zellabbildungsverarbeitungsvorrichtung über ein Netzwerk verbunden ist, wobei
die Zellabbildungsverarbeitungsvorrichtung aufweist:
einen Detektor (20) zum Detektieren einer Vielzahl weißer Blutzellen in der auf einen Objektträger geschmierten Probe;
einem Großbereichbildnehmer (21) zum Erhalten eines Großbereichbilds von jeder der Vielzahl von durch den Detektor detektierten weißen Blutzellen, und zwar durch Abbilden eines Bereichs, der eine durch den Detektor detektierte weiße Blutzelle einschließt und eine Vielzahl von roten Blutzellen, die die detektierte weiße Blutzelle umgeben;
einen Verarbeitungsteil (32) zur Entnahme eines Teilbildes von dem Großbereichbild einschließlich der detektierten weißen Blutzelle;
einer Übertragungseinrichtung (39) zum Übertragen des Großbereichbilds und des Teilbilds zu dem Überwachungsterminal, und einen Speicher (35), wobei
das Überwachungsterminal aufweist:
einen Anzeigeabschnitt (55); und
einen Empfänger (58) zum Empfangen des von der Übertragungseinrichtung übertragenen Großbereichbilds und Teilbilds;
**dadurch gekennzeichnet, dass** der Verarbeitungsteil eingerichtet ist, um Operationen auszuführen, umfassend:
Entnahme einer Vielzahl der Teilbilder von der Vielzahl von Großbereichbildern, die durch den Großbereichbildnehmer erhalten worden sind; und
Speichern einer festgelegten Anzahl von Teilbildern in dem Speicher als Abbildungen zum Überwachen einer weißen Blutzelle und Speichern einer kleineren Anzahl von Großbereichbildern als die festgelegte Anzahl in dem Speicher als Abbildung zum Überwachen einer roten Blutzelle; und
**dadurch**, dass der Speicher (35) das Teilbild als Abbildung zum Überwachen einer weißen Blutzelle speichert und das Großbereichbild als Abbildung zum Überwachen einer roten Blutzelle speichert;
und **dadurch**, dass
das System eine Steuereinrichtung (51) zum Steuern des Anzeigebereichs aufweist, um das durch den Empfänger empfangene Großbereichbild als Abbildung zum Überwachen einer roten Blutzelle anzuzeigen und das durch den Empfänger empfangene Teilbild als Abbildung zum Überwachen einer weißen Blutzelle anzuzeigen.

10. Zellabbildungsanzeigesystem nach Anspruch 9, bei dem
die Steuereinrichtung eingerichtet ist, den Anzeigeabschnitt zu steuern, um eine erste Bildschirmanzeige anzuzeigen, die das Großbereichbild oder das Teilbild einschließt, jedoch nicht das jeweils andere, und eine zweite Bildschirmanzeige, die das jeweils andere einschließt, jedoch nicht das Großbereichbild oder das Teilbild.

11. Zellabbildungsanzeigesystem nach Anspruch 9 oder 10, bei dem
die Steuereinrichtung eingerichtet ist, eine Informationseingabe bezüglich einer Morphologie der roten Blutzelle anzunehmen, die in dem Großbereichbild durch eine Bildschirmanzeige, die das auf dem Anzeigeabschnitt angezeigte Großbereichbild einschließt, einbezogen ist.

12. Zellabbildungsanzeigeverfahren in einer Zellabbildungsverarbeitungsvorrichtung (1) mit den Schritten:
Detektieren einer Vielzahl von weißen Blutzellen in einer auf einen Objektträger geschmierten Probe durch einen Detektor (20) der Zellabbildungsverarbeitungsvorrichtung;
Erhalten eines Großbereichbilds von jeder der Vielzahl von durch den Detektor detektierten weißen Blutzellen durch einen Großbereichbildnehmer (10) der Zellabbildungsverarbeitungsvorrichtung, einschließlich der Vielzahl detektierter weißer Blutzellen und einer Vielzahl roter Blutzellen, die die detektierten weißen Blutzellen umgeben;
Erhalten eines Teilbilds von jedem der durch den Großbereichbildnehmer (10) erhaltenen Großbereichbilder durch einen Verarbeitungsteil (30) der Zellabbildungsverarbeitungsvorrichtung, wobei das Teilbild die detektierte weiße Blutzelle von dem Großbereichbild einschließt;
Anzeigen des Teilbilds auf einer Anzeige (36) der Zellabbildungsverarbeitungsvorrichtung als Abbildung zum Überwachen der weißen Blutzelle; und
Anzeigen des Großbereichbilds auf der Anzeige der Zellabbildungsverarbeitungsvorrichtung als Abbildung zum Überwachen einer roten Blutzelle, das Verfahren des Weiteren umfassend:
Speichern einer festgelegten Anzahl der Teilbilder in einem Speicher (35) der Zellabbildungsverarbeitungsvorrichtung als Abbildungen zum Überwachen einer weißen Blutzelle in dem Speicher (35) und Speichern einer kleineren Anzahl der Großbereichsbilder als die festgelegte Anzahl in dem Speicher (35) als Abbildung zum Überwachen einer roten Blutzelle.

## Revendications

1. Appareil (4) de traitement d'images cellulaires, comprenant :
un détecteur (20) pour détecter plusieurs globules blancs dans un échantillon étalé sur une lame de verre ;
un dispositif d'obtention (21) d'image de grande surface pour obtenir une image de grande surface de chacun de la pluralité de globules blancs détectés par le détecteur en mettant en image une surface comprenant un globule blanc détecté par le détecteur et plusieurs globules rouges qui entourent le globule blanc détecté ;
une partie de traitement (32) pour obtenir une image de partie comprenant le globule blanc détecté de l'image de grande surface, et
une mémoire (35),
**caractérisé en ce que** la partie de traitement est configurée pour réaliser les opérations comprenant le fait:
d'obtenir plusieurs images de partie de la pluralité d'images de grande surface obtenues par le dispositif d'obtention d'image de grande surface ; et
de stocker un nombre prescrit des images de partie comme les images de contrôle du globule blanc dans la mémoire et de stocker un plus petit nombre des images de grande surface que le nombre prescrit comme l'image de contrôle du globule rouge dans la mémoire ;
et **en ce que** la mémoire (35) stocke l'image de partie comme une image de contrôle du globule blanc et de stockage de l'image de grande surface comme une image de contrôle du globule rouge.

2. Appareil de traitement d'images cellulaires de la revendication 1, comprenant en outre une section d'affichage (36), dans lequel
la partie de traitement est configurée pour commander la section d'affichage de manière à afficher l'image de grande surface et l'image de partie.

3. Appareil de traitement d'images cellulaires de la revendication 2, dans lequel la partie de traitement est configurée pour commander la section d'affichage de manière à afficher un premier écran, comprenant l'une de l'image de grande surface et de l'image de partie et ne comprenant pas l'autre de l'image de grande surface et de l'image de partie, et un deuxième écran comprenant l'autre de l'image de grande surface et de l'image de partie et ne comprenant pas l'une de l'image de grande surface et de l'image de partie.

4. Appareil de traitement d'images cellulaires de la revendication 2 ou 3, dans lequel
la partie de traitement est configurée pour accepter l'entrée d'informations concernant la morphologie du globule rouge compris dans l'image de grande surface à travers un écran comportant l'image de grande surface affichée sur la section d'affichage.

5. Appareil de traitement d'images cellulaires de l'une quelconque des revendications 2 à 4, dans lequel
la partie de traitement est configurée pour effectuer les opérations comprenant le fait :
(a) de déterminer un type de cellule du globule blanc à partir d'une pluralité de types de cellules prescrits sur la base de l'image de partie ;
(b) d'accepter l'entrée d'un type de cellule à afficher sur la section d'affichage à partir de la pluralité de types de cellules prescrits ; et
(c) de commander la section d'affichage pour afficher l'image de partie lorsque le type de cellule déterminé dans l'opération (a) est le type de cellule accepté dans l'opération (b).

6. Appareil de traitement d'images cellulaires de la revendication 5, dans lequel la partie de traitement est configurée pour accepter l'entrée des informations concernant le type de cellule du globule blanc compris dans l'image de partie à travers un écran comprenant l'image de partie affichée sur la section d'affichage.

7. Appareil de traitement d'images cellulaires de l'une quelconque des revendications 1 à 6, dans lequel
la partie de traitement est configurée pour extraire une surface de l'image de grande surface, dans laquelle seul le globule blanc unique détecté par le détecteur existe.

8. Appareil de traitement d'images cellulaires de l'une quelconque des revendications 1 à 7, dans lequel
la partie de traitement est configurée pour vérifier si une cellule sanguine détectée par le détecteur est un globule blanc ou non.

9. Système (1) d'affichage d'images cellulaires comprenant :
un appareil (4) de traitement d'images cellulaires pour délivrer en sortie une image cellulaire obtenue en mettant en image une cellule dans un échantillon étalé sur une lame de verre ; et
un terminal de contrôle (5) relié à l'appareil de traitement d'images cellulaire à travers un réseau, dans lequel
l'appareil de traitement d'images cellulaires comprend:
un détecteur (20) pour détecter plusieurs globules blancs dans l'échantillon appliqué sur la lame de verre ;
un dispositif d'obtention (21) d'image de grande surface pour obtenir une image de grande surface de chacune de la pluralité de globules blancs détectés par le détecteur en mettant en image une surface comprenant un globule blanc détecté par le détecteur et plusieurs globules rouges qui entourent le globule blanc détecté ;
une partie de traitement (32) pour obtenir une image de partie comprenant le globule blanc détecté de l'image de grande surface ;
un émetteur (39) pour transmettre l'image de grande surface et l'image de partie au terminal de contrôle, et une mémoire (35), et dans lequel
le terminal de contrôle comprend :
une section d'affichage (55) ; et
un récepteur (58) destiné à recevoir l'image de grande surface et l'image de partie reçue de l'émetteur ;
**caractérisé en ce que** la partie de traitement est configurée pour réaliser les opérations comprenant le fait:
d'obtenir plusieurs images de partie de la pluralité d'images de grande surface obtenues par le dispositif d'obtention d'image de grande surface ; et
de stocker un nombre prescrit des images de partie comme les images de contrôle du globule blanc dans la mémoire et de stocker un plus petit nombre d'images de grande surface que le nombre prescrit comme l'image de contrôle du globule rouge dans la mémoire ;
**en ce que** la mémoire (35) stocke l'image de partie comme une image de contrôle du globule blanc et de stockage de l'image de grande surface comme une image de contrôle du globule rouge ; et **en ce que**
le système comprend une unité de commande (51) pour commander la section d'affichage de sorte à afficher l'image de grande surface reçue par le récepteur comme une image de contrôle du globule rouge et à afficher l'image de partie reçue par le récepteur comme une image de contrôle du globule blanc.

10. Système d'affichage d'images cellulaires de la revendication 9, dans lequel
l'unité de commande est configurée pour commander la section d'affichage de sorte à afficher un premier écran, comprenant l'une de l'image de grande surface et de l'image de partie et ne comprenant pas l'autre de l'image de grande surface et de l'image de partie, et un deuxième écran, comprenant l'autre de l'image de grande surface et de l'image de partie et ne comprenant pas l'une de l'image de grande surface et de l'image de partie.

11. Système d'affichage d'images cellulaires de la revendication 9 ou 10, dans lequel
l'unité de commande est configurée pour accepter l'entrée d'informations concernant la morphologie du globule rouge compris dans l'image de grande surface à travers un écran comportant l'image de grande surface affichée sur la section d'affichage.

12. Procédé d'affichage d'images cellulaires dans un appareil (1) de traitement d'images cellulaires comprenant les étapes consistant :
à détecter par un détecteur (20) de l'appareil de traitement d'images cellulaires plusieurs globules blancs dans un échantillon appliqué sur une lame de verre ;
d'obtenir par un dispositif d'obtention (10) d'image de grande surface de l'appareil de traitement d'images cellulaires une image de grande surface de chacun de la pluralité de globules blancs détectée par le détecteur comprenant la pluralité de globules blancs détectés et une pluralité de globules rouges qui entourent le globule blanc détecté ;
d'obtenir par une partie de traitement (30) de l'appareil de traitement d'images cellulaires une image de partie de chacune des images de grande surface obtenues par le dispositif d'obtention (10) d'image de grande surface, où l'image de partie comprend le globule blanc détecté de l'image de grande surface ;
d'afficher sur un écran (36) de l'appareil de traitement d'images cellulaires l'image de partie comme une image de contrôle du globule blanc ; et
d'afficher sur l'écran de l'appareil de traitement de cellules l'image de grande surface comme une image de contrôle du globule rouge, le procédé comprenant en outre le fait :
de stocker dans une mémoire (35) de l'appareil de traitement d'images cellulaires, un nombre prescrit des images de partie comme les images de contrôle du globule blanc dans la mémoire (35) et de stocker un plus petit nombre d'images de grande surface que le nombre prescrit comme l'image de contrôle du globule rouge dans la mémoire (35).
